# EUROPEAN PATENT APPLICATION

(11) **EP 4 151 772 A1**
(43) Date of publication of application: **22.03.2023**
(21) Application number: 22158197.8
(22) Date of filing: 23.02.2022
(51) Int. Cl.: C25B 1/04, C25B 3/26, C25B 9/19, C25B 9/67, C25B 15/02, C25B 15/021, C25B 15/023, C25B 15/08

(54) **CARBON DIOXIDE ELECTROLYTIC DEVICE, METHOD OF ELECTROLYZING CARBON DIOXIDE, AND VALUABLE MATERIAL MANUFACTURING SYSTEM**

(30) Priority: 16.09.2021 JP 2021151516
(71) Applicant: KABUSHIKI KAISHA TOSHIBA, Minato-ku Tokyo 105-0023 (JP)
(72) Inventor: KUDO, Yuki, Minato-ku, Tokyo, 105-0023 (JP); ONO, Akihiko, Minato-ku, Tokyo, 105-0023 (JP); KIYOTA, Yasuhiro, Minato-ku, Tokyo, 105-0023 (JP); KOFUJI, Yusuke, Minato-ku, Tokyo, 105-0023 (JP); YAMAGIWA, Masakazu, Minato-ku, Tokyo, 105-0023 (JP); MIKOSHIBA, Satoshi, Minato-ku, Tokyo, 105-0023 (JP); KITAGAWA, Ryota, Minato-ku, Tokyo, 105-0023 (JP)
(74) Representative: Hoffmann Eitle

(57) **Abstract**

A carbon dioxide electrolytic device of an embodiment includes: an electrolysis cell including a first accommodation part for accommodating carbon dioxide, a second accommodation part for accommodating an electrolytic solution containing water, or water vapor, a diaphragm provided between the first accommodation part and the second accommodation part, a reduction electrode arranged in the first accommodation part, and an oxidation electrode arranged in the second accommodation part; a first power supply control unit capable of being connected to a first power supply which supplies power to the electrolysis cell; a second power supply control unit capable of being connected to a second power supply which supplies power to the electrolysis cell; and an integration control unit controlling the first power supply control unit and the second power supply control unit, and switching the supply of power from the first power supply or the second power supply to the electrolysis cell.

## Description

### FIELD

Embodiments disclosed herein relate to a carbon dioxide electrolytic device, a method of electrolyzing carbon dioxide, and a valuable material manufacturing system.

### BACKGROUND

In recent years, there is a concern over depletion of fossil fuel such as petroleum and coal, and expectations of sustainable renewable energy increase. As the renewable energy, there can be cited solar power generation, hydroelectric power generation, wind power generation, geothermal power generation, and so on. A power generation amount of these depends on weather, natural situation, and so on, and thus they are power supplies whose outputs vary (variable power supplies). Accordingly, attempts are made to adjust power by combining a variable power supply and a storage battery. However, when storing power, there are problems such that the storage battery is costly, and a loss occurs during the power storage.

In addition, as an attempt for decarbonization, attention is focused on a carbon dioxide electrolytic technique in which carbon dioxide (CO₂) is electrochemically reduced to be converted into chemical substances (chemical energies) such as carbon compounds such as carbon monoxide (CO), formic acid (HCOOH), methanol (CH₃OH), methane (CH₄), acetic acid (CH₃COOH), ethanol (C₂H₅OH), ethane (C₂H₆), and ethylene (C₂H₄). When the variable power supply using the renewable energy is connected to a carbon dioxide electrolytic device, there is an advantage that the adjustment of power and recycling of carbon dioxide can be performed simultaneously. In the combination of the variable power supply and the carbon dioxide electrolytic device, development of a system of suppressing a variation in a concentration of unreacted CO₂ in a produced gas, is being in progress.

In the case of electrochemically reducing CO₂ using the renewable energy, a variation in power is likely to occur due to the change in weather, wind condition, or the like, as described above. In accordance with such a variation in power, there are problems such that an operation of the carbon dioxide electrolytic device becomes unstable, and a reaction amount of CO₂ in the carbon dioxide electrolytic device is likely to change, and a concentration of an unreacted CO₂ gas in a produced gas is likely to vary. When a valuable material such as gasoline, jet fuel, or methanol is manufactured by using gas produced in a carbon dioxide electrolytic device, for example, a concentration variation of an unreacted CO₂ gas in a produced gas becomes a factor of reducing manufacturability, a manufacturing efficiency, and the like of the valuable material.

### SUMMARY

A subject to be solved by the aspects of the invention is to provide a carbon dioxide electrolytic device and a method of electrolyzing carbon dioxide which makes it possible to suppress instability of an operation accordance with a variation in power, and a valuable material manufacturing system using such a carbon dioxide electrolytic device.

According to the aspects of the present invention, there is provided a carbon dioxide electrolytic device and a method of electrolyzing carbon dioxide which makes it possible to suppress instability of an operation accordance with a variation in power, and a valuable material manufacturing system using such a carbon dioxide electrolytic device.

### BRIEF DESCRIPTION OF THE DRAWINGS

FIG. 1 is a view illustrating a carbon dioxide electrolytic device of a first embodiment.
FIG. 2 is a view illustrating an electrolysis cell in the carbon dioxide electrolytic device of the first embodiment.
FIG. 3 is a view illustrating an operation process of the carbon dioxide electrolytic device of the first embodiment.
FIG. 4 is a view illustrating a carbon dioxide electrolytic device of a second embodiment.
FIG. 5 is a view illustrating an electrolysis cell in the carbon dioxide electrolytic device of the second embodiment.
FIG. 6 is a view illustrating a carbon dioxide electrolytic device of a third embodiment.
FIG. 7 is a view illustrating a carbon dioxide electrolytic device of a fourth embodiment.
FIG. 8 is a view illustrating a carbon dioxide electrolytic device of a fifth embodiment.
FIG. 9 is a view illustrating an electrolysis cell in the carbon dioxide electrolytic device of the fifth embodiment.
FIG. 10 is a view illustrating a carbon dioxide electrolytic device of a sixth embodiment.
FIG. 11 is a view illustrating a carbon dioxide electrolytic device used in Examples.
FIG. 12 is a view illustrating a temporal change in a current in Example 1.
FIG. 13 is a view illustrating changes in a cell voltage, a reduction electrode potential, and an oxidation electrode potential when changing a time (Δt1) when a current of a first power supply is zero in Example 1.
FIG. 14 is a table illustrating results when examining whether it is possible to perform quick start-up when changing Δt1 in Example 1.
FIG. 15 is a table illustrating results when examining whether it is possible to perform quick start-up when changing Δt1 and a current during a warm-up operation in Example 1.
FIG. 16 a view illustrating a current change in slow start-up in Example 2.
FIG. 17 is a view illustrating results when measuring a cell voltage at a time of changing a current rising time Δt2 in Example 2.
FIG. 18 is a table illustrating results when examining whether it is possible to perform quick start-up when changing Δt2 in Example 2.

### DTAILED DESCRIPTION

A carbon dioxide electrolytic device of an embodiment includes: an electrolysis cell including a first accommodation part for accommodating at least carbon dioxide, a second accommodation part for accommodating an electrolytic solution containing water, or water vapor, a diaphragm provided between the first accommodation part and the second accommodation part, a reduction electrode arranged in the first accommodation part, and an oxidation electrode arranged in the second accommodation part; a first power supply control unit capable of being connected to a first power supply which supplies power to the electrolysis cell; a second power supply control unit capable of being connected to a second power supply which supplies power to the electrolysis cell; and an integration control unit controlling the first power supply control unit and the second power supply control unit, and switching the supply of power from the first power supply or the second power supply to the electrolysis cell.

A carbon dioxide electrolytic device, a method of electrolyzing carbon dioxide, and a valuable material manufacturing system in embodiments will be described hereinafter with reference to the drawings. In the embodiments to be described below, substantially the same components are denoted by the same reference signs, and description thereof is partially omitted in some cases. The drawings are schematic, and the relationship between thicknesses and plane dimensions, ratios between thicknesses of respective parts and the like differ from actual ones in some cases.

### (First embodiment)

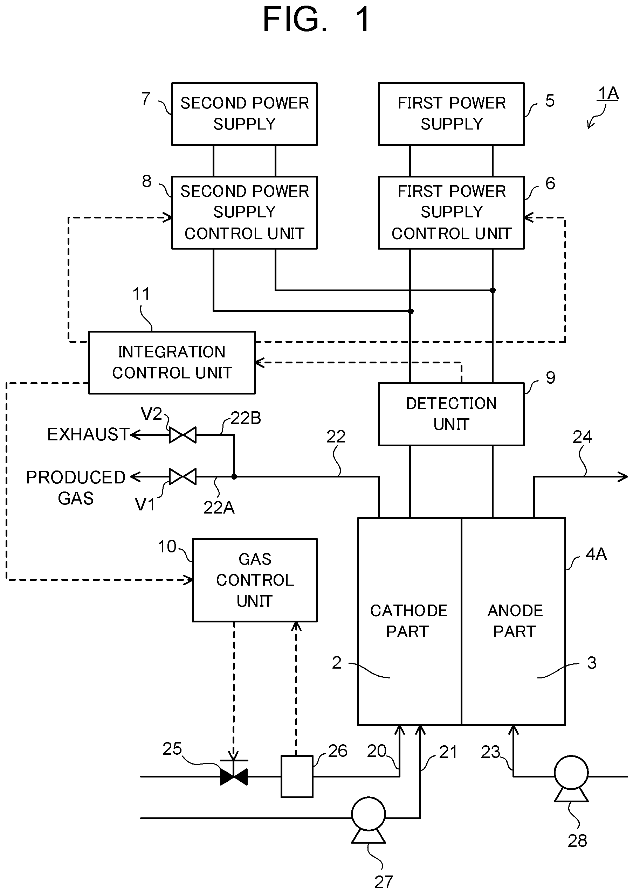

FIG. 1 is a view illustrating a carbon dioxide electrolytic device 1 (1A) of a first embodiment. The carbon dioxide electrolytic device 1A illustrated in FIG. 1 includes: a carbon dioxide (CO₂) electrolysis cell 4 (4A) including a cathode part 2 and an anode part 3; a first power supply control unit 6 connected to a first power supply (external power supply) 5 which supplies power to the electrolysis cell 4A; a second power supply control unit 8 connected to a second power supply (external power supply or internal power supply) 7 which supplies power to the electrolysis cell 4A; a detection unit 9 detecting a reaction amount in the electrolysis cell 4A; a gas control unit 10 controlling a supply amount of gas containing carbon dioxide (CO₂) to be supplied to the cathode part 2 of the electrolysis cell 4A, and the like; an integration control unit 11 controlling, in an integrated manner, the respective control units 6, 8, 10, the detection unit 9, and the like, and so on. Hereinafter, the respective units will be described in detail.

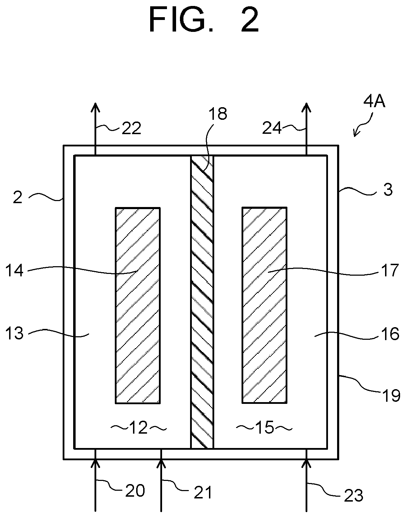

As illustrated in FIG. 2, the CO₂ electrolysis cell 4A includes: a cathode part 2 including a first accommodation part (accommodation vessel) 13 for accommodating a first electrolytic solution 12 containing CO₂, and a reduction electrode (cathode) 14 arranged in the first accommodation part 13; an anode part 3 including a second accommodation part (accommodation vessel) 16 for accommodating a second electrolytic solution 15 containing water, and an oxidation electrode (anode) 17 arranged in the second accommodation part 16; and a diaphragm 18 arranged between the first accommodation part 13 and the second accommodation part 16. The first accommodation part 13, the second accommodation part 16, and the diaphragm 18 form a reaction vessel 19.

The reaction vessel 19 is separated into two chambers of the first accommodation part 13 and the second accommodation part 16 by the diaphragm 18 capable of moving ions such as hydrogen ions (H⁺), hydroxide ions (OH⁻), hydrogen carbonate ions (HCO₃⁻), and carbonate ions (CO₃²⁻). The reaction vessel 19 may be made of, for example, quartz white plate glass, an acrylic resin (PMMA), polystyrene (PS), or the like. A material transmitting light may be used for a part of the reaction vessel 19, and a resin material may be used for the remainder. Examples of the resin material include polyetheretherketone (PEEK), polyamide (PA), polyvinylidene fluoride (PVDF), polyacetal (POM) (copolymer), polyphenyleneether (PPE), acrylonitrile-butadiene-styrene copolymer (ABS), polypropylene (PP), polyethylene (PE), and so on.

In the first accommodation part 13, the reduction electrode 14 is arranged, and further, CO₂ is accommodated. CO₂ is accommodated in the first accommodation part 13 as the first electrolytic solution 12 containing the CO₂, for example. The first electrolytic solution 12 functions as a reduction electrode solution (cathode solution), and contains carbon dioxide (CO₂) as a substance to be reduced. A state of CO₂ that exists in the first electrolytic solution 12 is not required to be a gaseous state, and it may be a state of dissolved CO₂, carbonate ions (CO₃²⁻), hydrogen carbonate ions (HCO₃⁻), or the like. The first electrolytic solution 12 may contain hydrogen ions, and is preferably an aqueous solution. In the second accommodation part 16, the oxidation electrode 17 is arranged, and further, the second electrolytic solution 15 containing water is accommodated. The second electrolytic solution 15 functions as an oxidation electrode solution (anode solution), and contains water (H₂O), chloride ions (Cl⁻), carbonate ions (CO₃²⁻), hydrogen carbonate ions (HCO₃⁻), and the like, for example, as a substance to be oxidized. The second electrolytic solution 15 may be an alcohol aqueous solution, an aqueous solution of an organic substance such as amine, or the like.

By changing the amount of water and electrolytic solution components contained in the first and second electrolytic solutions 12, 15, it is possible to change the reactivity, to thereby change the selectivity of the substance to be reduced and the proportion of the chemical substance to be produced. The first and second electrolytic solutions 12, 15 may contain redox couples according to need. As the redox couple, there can be cited, for example, Fe³⁺/Fe²⁺ and 10³⁻/I⁻. To the first accommodation part 13, a gas supply flow path 20 which supplies a raw material gas containing CO₂ and a first liquid supply flow path 21 which supplies the first electrolytic solution 12 are connected, and further, a first gas and liquid discharge flow path 22 which discharges a reactive gas and the first electrolytic solution 12 is connected. To the second accommodation part 16, a second liquid supply flow path 23 which supplies the second electrolytic solution 15 is connected, and further, a second gas and liquid discharge flow path 24 is connected. The first and second accommodation parts 13, 16 may include space parts for accommodating gas contained in the reactant and the product.

The gas supply flow path 20 is provided with a flow rate regulating part 25 which regulates an amount of the raw material gas containing CO₂ to be supplied to the first accommodation part 13. As the flow rate regulating part 25, for example, a variable throttle, a flow rate control valve or the like is used. The gas supply flow path 20 is further provided with a flowmeter 26. Specifically, it is designed such that a flow rate of the raw material gas that flows through the gas supply flow path 20 can be controlled by the flow rate regulating part 25, and further, the controlled flow rate of the raw material gas can be measured. The first liquid supply flow path 21 is provided with a pump 27 that feeds the first electrolytic solution 12 to the first accommodation part 13. The second liquid supply flow path 23 is provided with a pump 28 that feeds the second electrolytic solution 15 to the second accommodation part 16. The first gas and liquid discharge flow path 22 includes a produced gas flow path 22A and an exhaust flow path 22B, and the flow paths are configured to be switched by opening/closing valves VI, V2. To the first and second gas and liquid discharge flow paths 22, 24, a gas/liquid separator that separates the produced gas and the electrolytic solutions or the like may also be connected.

The pressure in each of the first and second accommodation parts 13, 16 is preferably set to a pressure which does not liquefy CO₂, and concretely, it is preferably regulated to fall within a range of 0.1 MPa or more and 6.4 MPa or less. If the pressure in each of the accommodation parts 13, 16 is less than 0.1 MPa, the reduction reaction efficiency of CO₂ may decrease. If the pressure in each of the accommodation parts 13, 16 exceeds 6.4 MPa, CO₂ is liquefied, and the reduction reaction efficiency of CO₂ may decrease. There is a case where breakage or the like of the diaphragm 18 occurs due to a differential pressure between the first accommodation part 13 and the second accommodation part 16. For this reason, the difference between the pressure in the first accommodation part 13 and the pressure in the second accommodation part 16 (differential pressure) is preferably set to 1 MPa or less.

The lower the temperature of the electrolytic solutions 12, 15, the higher the amount of dissolution of CO₂, but from a viewpoint of carbon dioxide electrolysis, at a low temperature, a solution resistance becomes high and a theoretical voltage of the reaction becomes high, which is disadvantageous. On the other hand, when the temperature of the electrolytic solutions 12, 15 is high, this is advantageous in terms of carbon dioxide electrolysis, although the amount of dissolution of CO₂ becomes low. For this reason, a working temperature condition of the electrolysis cell 4A is preferably in a middle temperature region, for example, in a range of an atmospheric temperature or more and equal to or less than a boiling point of the electrolytic solutions 12, 15. When the electrolytic solutions 12, 15 are aqueous solutions, the working temperature condition is preferably 10°C or more and 100°C or less, and more preferably 25°C or more and 80°C or less. When the raw material gas containing CO₂ is filled in the first accommodation part 13 and water vapor is filled in the second accommodation part 16, the operation at a higher temperature becomes possible. In that case, the working temperature is decided by taking heat resistance of a member such as the diaphragm 18 into consideration. When the diaphragm 18 is an ion exchange membrane or the like, the working temperature is 180°C at the maximum, and when it is a polymer porous membrane such as Teflon, the maximum temperature becomes 300°C.

The first electrolytic solution 12 and the second electrolytic solution 15 may be electrolytic solutions containing different substances or may be electrolytic solutions containing the same substance. When the first electrolytic solution 12 and the second electrolytic solution 15 contain the same substance and the same solvent, the first electrolytic solution 12 and the second electrolytic solution 15 may be regarded as one electrolytic solution. The pH of the second electrolytic solution 15 may be higher than the pH of the first electrolytic solution 12. This makes ions such as hydrogen ions and hydroxide ions easy to move via the diaphragm 18. Further, the liquid junction potential due to the difference in pH can effectively promote the oxidation-reduction reaction.

The first electrolytic solution 12 is preferably a solution with high absorptance of CO₂. The existing form of CO₂ in the first electrolytic solution 12 is not always limited to a state of being dissolved therein, and CO₂ in an air bubble state may exist by being mixed in the first electrolytic solution 12. As the electrolytic solution containing CO₂, for example, there can be cited aqueous solutions containing hydrogencarbonates and carbonates such as lithium hydrogen carbonate (LiHCO₃), sodium hydrogen carbonate (NaHCO₃), potassium hydrogen carbonate (KHCO₃), cesium hydrogen carbonate (CsHCO₃), sodium carbonate (Na₂CO₃), and potassium carbonate (K₂CO₃), phosphoric acid, boric acid, and so on. The electrolytic solution containing CO₂ may contain alcohols such as methanol, ethanol, and acetone, or may be an alcohol solution. The first electrolytic solution 12 may be an electrolytic solution containing a CO₂ absorbent that lowers the reduction potential for CO₂, has high ion conductivity, and absorbs CO₂.

As the second electrolytic solution 15, a solution using water (H₂O), for example, an aqueous solution containing an arbitrary electrolyte can be used. This solution is preferably an aqueous solution that promotes the oxidation reaction of water. As the aqueous solution containing the electrolyte, for example, there can be cited aqueous solutions containing phosphate ion (PO₄²⁻), borate ion (BO₃³⁻), sodium ion (Na⁺), potassium ion (K⁺), calcium ion (Ca²⁺), lithium ion (Li⁺), cesium ion (Cs⁺), magnesium ion (Mg²⁺), chloride ion (Cl⁻), hydrogen carbonate ion (HCO₃⁻), carbonate ion (CO₃²⁻), hydroxide ion (OH⁻), and the like.

As the above-described electrolytic solutions 12, 15, for example, ionic liquids made of salts of cations such as imidazolium ions or pyridinium ions and anions such as BF₄⁻ or PF₆⁻ and in a liquid state in a wide temperature range, or aqueous solutions thereof can be used. Further, as other electrolytic solutions, there can be cited amine solutions such as ethanolamine, imidazole, and pyridine, or aqueous solutions thereof. As amine, there can be cited primary amine, secondary amine, tertiary amine, and so on. These electrolytic solutions may be high in ion conductivity and have properties of absorbing carbon dioxide and characteristics of lowering the reduction energy.

As the primary amine, there can be cited methylamine, ethylamine, propylamine, butylamine, pentylamine, hexylamine, and the like. Hydrocarbons of the amine may be substituted by alcohol, halogen, and the like. As amine whose hydrocarbons are substituted, there can be cited methanolamine, ethanolamine, chloromethylamine, and the like. Further, an unsaturated bond may exist. These hydrocarbons are also the same in the secondary amine and the tertiary amine.

As the secondary amine, there can be cited dimethylamine, diethylamine, dipropylamine, dibutylamine, dipentylamine, dihexylamine, dimethanolamine, diethanolamine, dipropanolamine, and the like. The substituted hydrocarbons may be different. This also applies to the tertiary amine. Examples with different hydrocarbons include methylethylamine, methylpropylamine, and the like.

As the tertiary amine, there can be cited trimethylamine, triethylamine, tripropylamine, tributylamine, trihexylamine, trimethanolamine, triethanolamine, tripropanolamine, tributanolamine, triexanolamine, methyldiethylamine, methyldipropylamine, and the like.

As the cation of the ionic liquid, there can be cited 1-ethyl-3-methylimidazolium ion, 1-methyl-3-propylimidazolium ion, 1-butyl-3-methylimidazole ion, 1-methyl-3-pentylimidazolium ion, 1-hexyl-3-methylimidazolium ion, and the like.

A second place of the imidazolium ion may be substituted. As the cation of the imidazolium ion whose second place is substituted, there can be cited 1-ethyl-2,3-dimethylimidazolium ion, 1,2-dimethyl-3-propylimidazolium ion, 1-butyl-2,3-dimethylimidazolium ion, 1,2-dimethyl-3-pentylimidazolium ion, 1-hexyl-2,3-dimethylimidazolium ion, and the like.

As the pyridinium ion, there can be cited methylpyridinium, ethylpyridinium, propylpyridinium, butylpyridinium, pentylpyridinium, hexylpyridinium, and the like. In both of the imidazolium ion and the pyridinium ion, an alkyl group may be substituted, or an unsaturated bond may exist.

As the anion, there can be cited fluoride ion (F⁻), chloride ion (Cl⁻), bromide ion (Br⁻), iodide ion (I⁻), BF₄⁻, PF₆⁻, CF₃COO⁻, CF₃SO₃⁻, NO₃⁻, SCN⁻, (CF₃SO₂)₃C⁻, bis(trifluoromethoxysulfonyl)imide, bis(perfluoroethylsulfonyl)imide, and the like. Dipolar ions in which the cations and the anions of the ionic liquid are coupled by hydrocarbons may be used. A buffer solution such as a potassium phosphate solution may be supplied to the accommodation parts 13, 16.

For the diaphragm 18, a membrane capable of selectively allowing the anion or the cation to pass therethrough is used. This makes it possible to make the electrolytic solutions 12, 15 which are brought into contact with the reduction electrode 14 and the oxidation electrode 17, respectively, to be electrolytic solutions containing different substances, and to promote the reduction reaction and the oxidation reaction depending on the difference in ionic strength, the difference in pH or the like. The first electrolytic solution 12 and the second electrolytic solution 15 can be separated by using the diaphragm 18. The diaphragm 18 may have a function of allowing a part of ions contained in the electrolytic solutions 12, 15 in which both the electrodes 14, 17 are immersed to be transmitted therethrough, namely, a function of blocking one or more kinds of ions contained in the electrolytic solutions 12, 15. This can differ, for example, the pH or the like between the two electrolytic solutions 12, 15.

As the diaphragm 18, for example, an ion exchange membrane such as NEOSEPTA (registered trademark) of ASTOM Corporation, Selemion (registered trademark), Aciplex (registered trademark) of ASAHI GLASS CO., LTD., Fumasep (registered trademark), fumapem (registered trademark) of Fumatech GmbH, Nafion (registered trademark) being fluorocarbon resin made by sulfonating and polymerizing tetrafluoroethylene of E.I. du Pont de Nemours and Company, lewabrane (registered trademark) of LANXESS AG, IONSEP (registered trademark) of IONTECH Inc., Mustang (registered trademark) of PALL Corporation, ralex (registered trademark) of mega Corporation, or Gore-Tex (registered trademark) of Gore-Tex Co., Ltd. can be used. Besides, the ion exchange membrane may be composed by using a membrane having hydrocarbon as a basic skeleton or a membrane having an amine group in anion exchange. When the first electrolytic solution 12 and the second electrolytic solution 15 are different in pH, the electrolytic solutions can be used while stably keeping their pHs by using a bipolar membrane made by stacking a cation exchange membrane and an anion exchange membrane.

Other than the ion exchange membrane, for example, porous membranes of a silicone resin, fluorine-based resins such as perfluoroalkoxyalkane (PFA), perfluoroethylene propene copolymer (FEP), polytetrafluoroethylene (PTFE), ethylene-tetrafluoroethylene copolymer (ETFE), polyvinylidene fluoride (PVDF), polychlorotrifluoroethylene (PCTFE), and ethylene-chlorotrifluoroethylene copolymer (ECTFE), polyethersulfone (PES), and ceramics, packing filled with glass filter, agar, and the like, insulating porous bodies of zeolite and oxide and the like may be used as the diaphragm 18. In particular, a hydrophilic porous membrane never causes clogging due to air bubbles, so that it is preferably used as the diaphragm 18.

The reduction electrode 14 is an electrode (cathode) that reduces carbon dioxide (CO₂) to produce a carbon compound. The reduction electrode 14 is arranged in the first accommodation part 13 and immersed in the first electrolytic solution 12. The reduction electrode 14 contains a reduction catalyst for producing the carbon compound by the reduction reaction of, for example, carbon dioxide. As the reduction catalyst, there can be cited a material that lowers activation energy for reducing carbon dioxide. In other words, a material that lowers an overvoltage when the carbon compound is produced by the reduction reaction of carbon dioxide, can be cited.

As the reduction electrode 14, for example, a metal material or a carbon material can be used. As the metal material, for example, a metal such as gold, aluminum, copper, silver, platinum, palladium, zinc, mercury, indium, nickel, or titanium, an alloy containing the metal, or the like can be used. As the carbon material, for example, graphene, carbon nanotube (CNT), fullerene, ketjen black, or the like can be used. The reduction catalyst is not limited to the above, and it is possible to use, for example, a metal complex such as a Ru complex or a Re complex, or an organic molecule having an imidazole skeleton or a pyridine skeleton, as the reduction catalyst. The reduction catalyst may be a mixture of a plurality of materials. The reduction electrode 14 may have, for example, a structure having the reduction catalyst in a thin film shape, a mesh shape, a particle shape, a wire shape, or the like provided on a conductive substrate.

The carbon compound produced by the reduction reaction at the reduction electrode 14 differs depending on the kind or the like of the reduction catalyst, and examples thereof include carbon monoxide (CO), formic acid (HCOOH), methane (CH₄), methanol (CH₃OH), ethane (C₂H₆), ethylene (C₂H₄), ethanol (C₂H₅OH), formaldehyde (HCHO), ethylene glycol (C₂H₆O₂), and so on. At the reduction electrode 14, a side reaction of generating hydrogen (H₂) by the reduction reaction of water (H₂O) may occur at the same time with the reduction reaction of carbon dioxide (CO₂).

The oxidation electrode 17 is an electrode (anode) that oxidizes a substance to be oxidized such as a substance, ions, and so on in the second electrolytic solution 15. For example, the oxidation electrode 17 oxidizes water (H₂O) to produce oxygen or hydrogen peroxide solution, or it oxidizes chloride ions (Cl⁻) to produce chlorine. The oxidation electrode 17 is arranged in the second accommodation part 16, and immersed in the second electrolytic solution 15. The oxidation electrode 17 contains an oxidation catalyst for the substance to be oxidized. As the oxidation catalyst, a material that lowers activation energy when oxidizing the substance to be oxidized, in other words, a material that lowers a reaction overvoltage is used.

As such oxidation catalyst material, there can be cited, for example, metals such as ruthenium, iridium, platinum, cobalt, nickel, iron, and manganese. Further, a binary metal oxide, a ternary metal oxide, a quaternary metal oxide, or the like can be used. As the binary metal oxide, there can be cited, for example, manganese oxide (Mn-O), iridium oxide (Ir-O), nickel oxide (Ni-O), cobalt oxide (Co-O), iron oxide (Fe-O), tin oxide (Sn-O), indium oxide (In-O), ruthenium oxide (Ru-O), and the like. As the ternary metal oxide, there can be cited, for example, Ni-Fe-O, Ni-Co-O, La-Co-O, Ni-La-O, Sr-Fe-O, and the like. As the quaternary metal oxide, there can be cited, for example, Pb-Ru-Ir-O, La-Sr-Co-O, and the like. The oxidation catalyst is not limited to the above, and a metal hydroxide containing cobalt, nickel, iron, manganese, or the like, or a metal complex such as a Ru complex or a Fe complex can also be used as the oxidation catalyst. Further, a plurality of materials may be mixed to be used.

The oxidation electrode 17 may be composed of a composite material containing both the oxidation catalyst and a conductive material. As the conductive material, for example, there can be cited: carbon materials such as carbon black, activated carbon, fullerene, carbon nanotube, graphene, ketjen black, and diamond; transparent conductive oxides such as indium tin oxide (ITO), zinc oxide (ZnO), fluorine-doped tin oxide (FTO), aluminum-doped zinc oxide (AZO), and antimony-doped tin oxide (ATO); metals such as Cu, Al, Ti, Ni, Ag, W, Co, and Au; and alloys each containing at least one of the metals. The oxidation electrode 17 may have, for example, a structure having the oxidation catalyst in a thin film shape, a mesh shape, a particle shape, a wire shape, or the like provided on a conductive substrate. As the conductive substrate, for example, a metal material containing titanium, titanium alloy, or stainless steel is used.

The flow rate regulating part 25 provided to the gas supply flow path 20 regulates the amount of raw material gas containing CO₂ to be supplied to the first accommodation part 13. By increasing/decreasing, with the use of the flow rate regulating part 25, the amount of CO₂ to be supplied to the first accommodation part 13, it is possible to regulate a concentration of unreacted CO₂ in the gas discharged from the first accommodation part 13, namely, a utilization ratio of CO₂ gas. As will be described hereinafter in detail, even in a case where the amount of CO₂ consumed by the reduction reaction of CO₂ changes when the power supplied to the electrolysis cell 4A from the first power supply 5 connected via the first power supply control unit 6 varies and when performing a warm-up operation by the second power supply 7 connected via the second power supply control unit 8, it becomes possible to stabilize the CO₂ concentration in the produced gas by increasing/decreasing, with the use of the flow rate regulating part 25, the amount of CO₂ to be supplied to the first accommodation part 13. Consequently, a mechanism or a process of regulating the CO₂ concentration in the produced gas discharged from the first accommodation part 13 is simplified or becomes unnecessary, resulting in that the cost for the carbon dioxide electrolytic device 1A and the valuable material manufacturing system can be reduced.

The first power supply control unit 6 and the first power supply 5 are to supply power to make the electrolysis cell 4A cause the oxidation-reduction reaction, and are electrically connected to the reduction electrode 14 and the oxidation electrode 17 of the electrolysis cell 4A. The electric energy supplied from the first power supply 5 is used to cause the reduction reaction by the reduction electrode 14 and the oxidation reaction by the oxidation electrode 17. The first power supply control unit 6 and the first power supply 5, and the reduction electrode 14 are connected, and the first power supply control unit 6 and the first power supply 6, and the oxidation electrode 17 are connected, for example, by wiring. In the first power supply control unit 6, electric equipment such as a DC/AC converter, a DC/DC converter, an AC/DC converter, an inverter, a converter, or a switch is installed. The drive system of the electrolysis cell 4A may be a constant-voltage system or a constant-current system.

Between the first power supply control unit 6 and the electrolysis cell 4A, there is provided the detection unit 9 including a current detecting part detecting a current that flows through the electrolysis cell 4A or a voltage detecting part detecting a voltage and a potential applied to the electrolysis cell 4A. The detection unit 9 includes at least one of the current detecting part and the voltage detecting part. The detection unit 9 may have a mechanism in which the voltage and the current applied to the electrolysis cell 4A are measured in a divided manner by using not-illustrated wiring and the electrodes arranged in the electrolysis cell 4A. A detection signal of the detection unit 9 is sent to the integration control unit 11. The integration control unit 11 performs an arithmetic operation based on the current that flows through the electrolysis cell 4A or the voltage applied to the electrolysis cell 4A. From the integration control unit 11, control signals are sent to the first power supply control unit 6, the second power supply control unit 8, and the gas control unit 10.

The first power supply 5 may be a variable power supply, namely, a power supply that supplies electric energy obtained by converting renewable energy. Examples of such power supply include a power supply that converts kinetic energy or potential energy of wind power, water power, geothermal power, tidal power or the like into electric energy, a power supply such as a solar cell including a photoelectric conversion element that converts light energy into electric energy, a power supply such as a fuel cell or a storage battery that converts chemical energy into electric energy, a power supply that converts vibrational energy such as sound into electric energy, and so on. The photoelectric conversion element has a function of performing charge separation by light energy such as emitted sunlight. Examples of the photoelectric conversion element include a pin-junction solar cell, a pn-junction solar cell, an amorphous silicon solar cell, a multijunction solar cell, a single crystal silicon solar cell, a polycrystalline silicon solar cell, a dye-sensitized solar cell, an organic thin-film solar cell, and the like. The photoelectric conversion element may be stacked on at least one of the reduction electrode 14 and the oxidation electrode 17 inside the reaction vessel 19. Further, the first power supply 5 may also be a normally-used commercial power supply, battery, or the like.

The second power supply control unit 8 and the second power supply 7 are to supply power to make the electrolysis cell 4A cause the oxidation-reduction reaction, and are electrically connected to the reduction electrode 14 and the oxidation electrode 17 of the electrolysis cell 4A. The electric energy supplied from the second power supply 7 is used to cause the reduction reaction by the reduction electrode 14 and the oxidation reaction by the oxidation electrode 17. The second power supply control unit 8 and the second power supply 7, and the reduction electrode 14 are connected, and the second power supply control unit 8 and the second power supply 7, and the oxidation electrode 17 are connected, for example, by wiring. In the second power supply control unit 8, electric equipment such as a DC/AC converter, a DC/DC converter, an AC/DC converter, an inverter, a converter, or a switch is installed. The drive system of the electrolysis cell 4A may be a constant-voltage system or a constant-current system. The second power supply 7 may also be a storage battery, a commercial power supply, a fuel cell, or the like. The second power supply 7 is preferably a power supply having a rated voltage and/or a rated current.

The integration control unit 11 is configured by a computer such as a PC or a microcomputer, for example, and it arithmetically processes the detection signal output from the detection unit 9. The control signals from the integration control unit 11 are sent to the first power supply control unit 6, the second power supply control unit 8, the gas control unit 10, and the like. The first power supply control unit 6, the second power supply control unit 8, the gas control unit 10, and the integration control unit 11 may be respectively configured in an independent manner, or they may also be integrated by a computer such as a PC or a microcomputer.

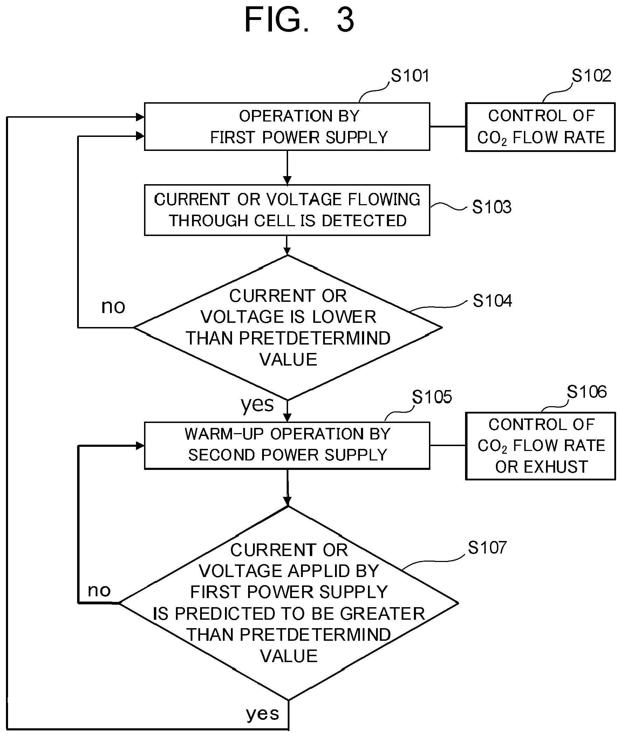

Next, operation methods of the carbon dioxide electrolytic device 1 by using the first power supply 5 and the second power supply 7 will be described with reference to FIG. 3. The operation methods of the carbon dioxide electrolytic device 1A by using the first power supply 5 and the second power supply 7 include a normal operation and a warm-up operation. When, in a case where a variable power supply is used for the first power supply 5, a state of stopping the supply of power from the first power supply 5, namely, a state where the current flowing through the electrolysis cell 4A is zero is continued, and then the supply of power is restarted, namely, the energization is restarted rapidly, a phenomenon is sometimes observed in which the voltage in the electrolysis cell 4A is drastically increased, which makes it difficult for the electrolysis cell 4A to start up. In order to follow such an operation variation due to the quick start-up of the electrolysis cell 4A, the warm-up operation to be described in detail hereinafter is executed by using the second power supply 7, for example.

In the normal operation, the first power supply 5 supplies power to the electrolysis cell 4A (S101). In the normal operation, the control of CO₂ flow rate may be performed for regulating the concentration of unreacted CO₂ output from the electrolysis cell 4A (S102). During the normal operation, the detection unit 9 detects the current or the voltage flowing through the electrolysis cell 4A (S103). When the detected current or voltage flowing through the electrolysis cell 4A is lower than a predetermined value for a predetermined period of time, for example (S104), the second power supply control unit 8 introduces the warm-up operation by using the second power supply 7 (S105). At this time, the first power supply 5 may be disconnected by the first power supply control unit 6, or the first power supply 5 and the second power supply 7 may be operated in a parallel manner. The determination whether the current or the voltage flowing through the electrolysis cell 4A is lower than the predetermined value for the predetermined period of time is performed by the integration control unit 11, and the control signals from the integration control unit 11 are sent to the first and second power supply control units 6, 8, to thereby perform not only a switching control of the first power supply 5 and the second power supply 7, but also control of CO₂ supply amount by the gas control unit 10 (S106).

During the warm-up operation, the second power supply control unit 8 makes a current smaller than the rated current flow through the electrolysis cell 4A from the second power supply 7. The amount of CO₂ consumed in the reduction reaction of CO₂ during the warm-up operation becomes smaller than that during the normal operation. For this reason, in order to regulate the concentration of unreacted CO₂ output from the electrolysis cell 4A, the integration control unit 11 sends the control signal to the gas control unit 10, and the gas control unit 10 controls the operation of the flow rate regulating part 25. At this time, in order to increase the accuracy of the flow rate regulation, it is possible to provide a feedback mechanism in which the flowmeter 26 measures the flow rate of the raw material gas to be supplied to the first accommodation part 13, and the measured data is transmitted to the gas control unit 10, as illustrated in FIG. 1. It is not limited to design such that each of the flow rate regulating part 25 and the flowmeter 26 illustrated in FIG. 1 is independently functioned and provided, and it is also possible to use equipment such as a mass flow controller in which functions of measuring and regulating a flow rate of gas or liquid are integrally provided. It is also possible to design such that, during the warm-up operation, the CO₂ flow rate is not regulated but switching to the exhaust flow path 22B is performed through the operation of the valves VI, V2, to thereby exhaust the gas output from the electrolysis cell 4A. The control of the first power supply 5 and the second power supply 7 such as the switching to the normal operation and the warm-up operation, and the parallel operation, and the control of the flow rate of CO₂ to be introduced into the electrolysis cell 4A and the exhaust operation, are performed in a linked manner.

Next, when the integration control unit 11 predicts, based on a prediction of weather, a power generation amount of a solar cell, a wind power generator, or the like being the first power supply 5, and a state in which a current or a voltage which flows when operating the electrolysis cell 4A by the first power supply 5 is greater than a predetermined value is predicted to continue for a predetermined period of time (S107), the warm-up operation performed by the second power supply 7 is returned to the normal operation performed by the first power supply 5. Regarding the return from the second power supply 7 to the first power supply 5, it is also possible to design such that when the current or the voltage flowing from the first power supply 5, which is measured by the first power supply control unit 6, is greater than the predetermined value for the predetermined period of time, for example (S107), the warm-up operation is terminated to return to the normal operation. By introducing such a warm-up operation, the quick start-up of the electrolysis cell 4A becomes possible, the followability with respect to the variable current can be secured, and further, the variation in the CO₂ concentration in the gas output from the electrolysis cell 4A can also be suppressed.

As another operation method of the warm-up operation, it is possible to adopt an operation method called slow start-up to be described next. During the normal operation, a prediction of power generation amount of a solar cell, a wind power generator, or the like being the first power supply 5 is performed based on a prediction of weather, and when a state where a current or a voltage flowing through the electrolysis cell 4A is lower than a predetermined value is predicted to continue for a predetermined period of time, the first power supply 5 is disconnected by the first power supply control unit 6, to turn the electrolysis cell 4A into a stopped state. At this time, it is preferable to stop the supply of CO₂ and the electrolytic solution as well. Next, when, based on the prediction of the power generation amount of the first power supply 5, a state where the current or the voltage flowing through the electrolysis cell 4A is greater than the predetermined value is predicted to continue for the predetermined period of time, the slow start-up of the electrolysis cell 4A with a ramp wave is performed by the second power supply control unit 8 and the second power supply 7.

The slow start-up with the ramp wave is an operation method in which the current flowing through the electrolysis cell 4A is increased from a zero-state to the rated current by taking a current rising time Δt. If Δt is excessively short, a cell voltage rises excessively, resulting in that the electrolysis cell 4A cannot be started up, so that Δt is preferably 5 minutes or more, more preferably 10 minutes or more, and still more preferably 30 minutes or more. After the current reaches the rated current by the slow start-up, the operation is switched to the normal operation performed by the first power supply control unit 6 and the first power supply 5. The CO₂ concentration in the gas output from the electrolysis cell 4A during the slow start-up is not stabilized, so that the gas output from the electrolysis cell 4A may be exhausted by performing switching to the exhaust flow path 22B through the valve operation.

Next, the operation of the carbon dioxide electrolytic device 1A will be described. Here, a case of using an aqueous solution containing carbon dioxide and an aqueous potassium hydrogen carbonate solution as the electrolytic solutions 12, 15 to reduce carbon dioxide (CO₂) to mainly produce carbon monoxide (CO), and oxidize water or hydroxide ions to produce oxygen will be described. The reduction reaction of CO₂ is not limited to the CO production reaction, and may be a production reaction of ethanol (C₂H₅OH), ethylene (C₂H₄), ethane (C₂H₆), methane (CH₄), methanol (CH₃OH), acetic acid (CH₃COOH), propanol (C₃H₇OH), or the like.

When a voltage of a bath voltage or more is applied between the reduction electrode 14 and the oxidation electrode 17, the reduction reaction of carbon dioxide (CO₂) occurs in the vicinity of the reduction electrode 14 which is brought into contact with the first electrolytic solution 12. As expressed in the following Expression (1), CO₂ contained in the first electrolytic solution 12 is reduced by electrons (e⁻) supplied from the power supply to produce carbon monoxide (CO) and hydroxide ions (OH⁻). As expressed in Expression (2) and Expression (3), a part of the produced hydroxide ions (OH⁻) reacts with CO₂, resulting in that hydrogen carbonate ions (HCO₃⁻) and carbonate ions (CO₃²⁻) are produced. By the voltage between the reduction electrode 14 and the oxidation electrode 17, a part of the hydroxide ions (OH⁻), the hydrogen carbonate ions (HCO₃⁻), and the carbonate ions (CO₃²⁻) moves through the diaphragm 18 into the second electrolytic solution 15.

2CO₂ + 2H₂O + 4e⁻ → 2CO + 40H⁻ ... (1)

2CO₂ + 2OH⁻ → 2HCO₃⁻ ... (2)

2HCO₃⁻ + 2OH⁻ → CO₃²⁻ + H₂O ... (3)

In the vicinity of the oxidation electrode 17 which is brought into contact with the second electrolytic solution 15, the oxidation reaction of water (H₂O) occurs. As expressed in the following Expression (4), the oxidation reaction of H₂O contained in the second electrolytic solution 15 occurs, and electrons are lost and oxygen (O₂) and hydrogen ions (H⁺) are produced.

2H₂O → 4H⁺ + O₂ + 4e⁻ ... (4)

As expressed in Expression (5) to Expression (7), a part of the produced hydrogen ions (H⁺) reacts with a part of the hydroxide ions (OH⁻), the hydrogen carbonate ions (HCO₃⁻), and the carbonate ions (CO₃²⁻) moved through the diaphragm 18, and water (H₂O) and carbon dioxide (CO₂) are produced.

2H⁺ + CO₃²⁻ → H₂O + CO₂ ... (5)

2H⁺ + 2HCO₃⁻ → 2H₂O + 2CO₂ ... (6)

H⁺ + OH⁻ → H₂O ... (7)

Although the operation through the production of OH⁻ in the reduction electrode 14 has been described above, the operation through the production and the movement of H⁺ in the oxidation electrode 17 may be performed, as will be described hereinbelow. When a voltage of a bath voltage or more is applied between the reduction electrode 14 and the oxidation electrode 17, the oxidation reaction of water (H₂O) occurs in the vicinity of the oxidation electrode 17 which is brought into contact with the second electrolytic solution 15. As expressed in the following Expression (8), the oxidation reaction of H₂O contained in the second electrolytic solution 15 occurs, and electrons are lost and oxygen (O₂) and hydrogen ions (H⁺) are produced. A part of the produced hydrogen ions (H⁺) moves through the diaphragm 18 into the first electrolytic solution 12.

2H₂O → 4H⁺ + O₂ + 4e⁻ ... (8)

When the hydrogen ions (H⁺) produced on the oxidation electrode 17 side reach the vicinity of the reduction electrode 14 and electrons (e⁻) are supplied to the reduction electrode 14 from the power supply 5, the reduction reaction of carbon dioxide (CO₂) occurs. As expressed in the following Expression (9), CO₂ contained in the first electrolytic solution 12 is reduced by the hydrogen ions (H⁺) moved to the vicinity of the reduction electrode 14 and the electrons (e⁻) supplied from the power supply 5 to produce carbon monoxide (CO).

2CO₂ + 4H⁺ + 4e⁻ → 2CO + 2H₂O ... (9)

As described above, for the reduction reaction of carbon dioxide, the movement of ions to the reduction electrode 14 and the movement of ions to the oxidation electrode 17 become necessary. When the current or the voltage flowing through the electrolysis cell 4A is lower than the predetermined value for the predetermined period of time, these movements of ions become small, which generates problems that the quick start-up to the rated current cannot be performed and it is not possible to follow the variable current. By introducing the warm-up operation by the second power supply 7 when the current or the voltage flowing through the electrolysis cell 4A is lower than the predetermined value for the predetermined period of time or when it is predicted to be lower than the predetermined value for the predetermined period of time, the movement of ions can be continued, resulting in that the possibility of the quick start-up to the rated current and the followability with respect to the variable current can be increased. Therefore, also in a case where a variable power supply is used as the first power supply 5, for example, it becomes possible to stabilize the operation of the carbon dioxide electrolytic device 1A, and to suppress the variation in the concentration of CO₂ gas in the produced gas. Besides, by suppressing the variation with time in the concentration of unreacted CO₂, it becomes possible to enhance the availability and utility value of the produced gas in the next process.

### (Second embodiment)

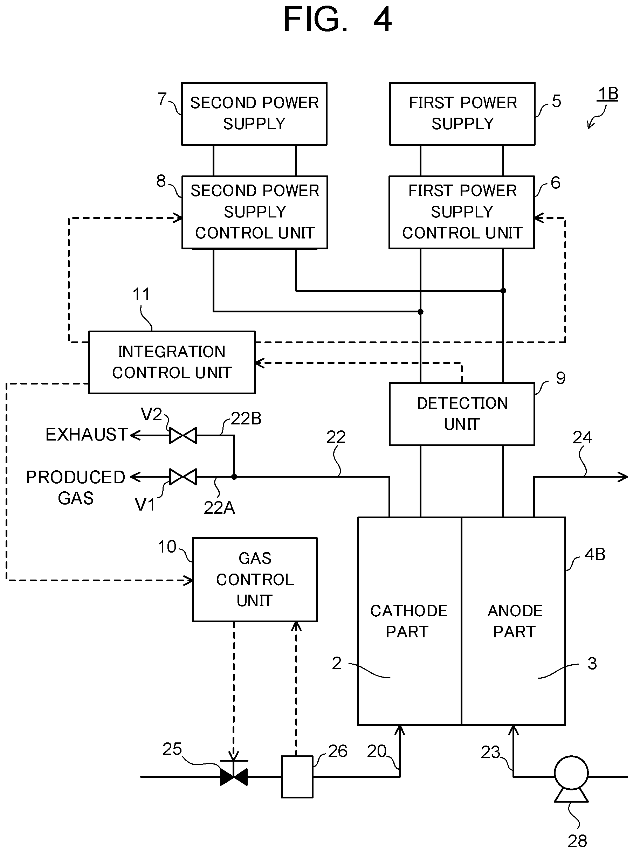

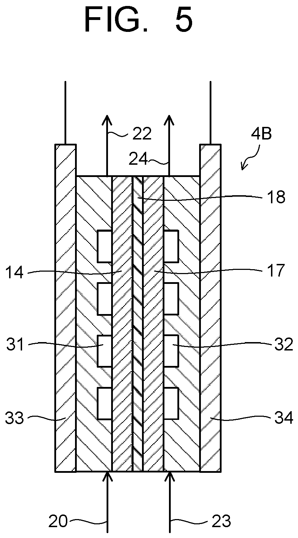

A carbon dioxide electrolytic device 1B of a second embodiment will be described while referring to FIG. 4 and FIG. 5. The carbon dioxide electrolytic device 1B illustrated in FIG. 4 is different from the carbon dioxide electrolytic device 1A of the first embodiment in a contact type of gas containing CO₂ (simply described as CO₂ gas in some cases) with the reduction electrode 14, and a contact type of a second electrolytic solution (anode solution) containing water with the oxidation electrode 17. Specifically, an electrolysis cell 4B in the carbon dioxide electrolytic device 1B of the second embodiment has a configuration different from that of the electrolysis cell 4A according to the first embodiment. The configurations of the respective units other than them, for example, the concrete configurations of the reduction electrode 14, the oxidation electrode 17, the diaphragm 18, the second electrolytic solution, the power supplies 5, 7, and so on, are similar to those of the first embodiment.

In the second embodiment, it is also possible to use a first electrolytic solution containing CO₂ in place of the gas containing CO₂. Further, it is also possible to design such that a flow path whose illustration is omitted is provided between the reduction electrode 14 and the diaphragm 18, the gas containing CO₂ is made to flow through a first flow path 31, and the first electrolytic solution is made to flow through the flow path between the reduction electrode 14 and the diaphragm 18. The first electrolytic solution used in that case may or may not contain CO₂. Further, it is also possible to use gas containing water vapor in place of the second electrolytic solution containing water.

As illustrated in FIG. 5, the electrolysis cell 4B according to the second embodiment includes the reduction electrode 14, the oxidation electrode 17, the diaphragm 18, the first flow path 31 for allowing gas containing CO₂ (or a first electrolytic solution containing CO₂) to flow therethrough, a second flow path 32 for allowing a second electrolytic solution (anode solution) containing water to flow therethrough, a first current collector plate 33 electrically connected to the reduction electrode 14, and a second current collector plate 34 electrically connected to the oxidation electrode 17. The first flow path 31 forms a first accommodation part, and the second flow path 32 forms a second accommodation part. The first and second current collector plates 33, 34 of the electrolysis cell 4B are connected to the detection unit 9, the first power supply control unit 6, the first power supply 5, the second power supply control unit 8, and the second power supply 7 illustrated in FIG. 4, via wiring.

There is a case where, in an operation of the electrolysis cell 4B, a reduction product of CO₂ or a component of the second electrolytic solution moved to the reduction electrode 14 side is solidified to be precipitated in the first flow path 31, which blocks the first flow path 31, resulting in that the supply of gas containing CO₂ is stopped. For this reason, in order to suppress the formation of precipitates, the gas containing CO₂ desirably contains moisture. On the other hand, when a moisture amount in the gas containing CO₂ is excessively large, a large amount of moisture is supplied to a surface of catalyst in the reduction electrode 14, and the generation of hydrogen is likely to occur, which is not preferable. For this reason, the moisture amount in the gas containing CO₂ is preferably 20 to 90%, and more preferably 30 to 70% in terms of relative humidity.

To the first flow path 31, a first supply flow path 20 which supplies gas containing CO₂, and a first discharge flow path 22 which discharges produced gas, are connected. To the second flow path 32, a second supply flow path 23 which supplies an electrolytic solution containing water, and a second discharge flow path 24 are connected. The configurations of the detection unit 9, the first power supply control unit 6, the first power supply 5, the second power supply control unit 8, the second power supply 7, the gas control unit 10, the integration control unit 11, the flow rate regulating part 25, the flowmeter 26, and so on, can be set to be similar to those of the first embodiment, and they are electrically or mechanically connected, in a similar manner to the first embodiment.

The first flow path 31 is arranged to face the reduction electrode 14. The first flow path 31 is connected to the first supply flow path 20, and the gas containing CO₂ is supplied to the first flow path 31 from the first supply flow path 20. In the first supply flow path 20, a pump (not illustrated), the flow rate regulating part 25, and the flowmeter 26 are arranged. Although the illustration is omitted, the first supply flow path 20 is connected to a tank containing CO₂ gas. It is configured such that the CO₂ gas or the cathode solution is brought into contact with the reduction electrode 14 when it flows through the first flow path 31. The CO₂ in the CO₂ gas or the cathode solution passed through the reduction electrode 14 is reduced by the reduction electrode 14. The gas or solution containing the reduction reaction product of CO₂ is discharged from the first discharge flow path 22. The first discharge flow path 22 may be provided with a product detection unit or the like whose illustration is omitted. Further, the first discharge flow path 22 is connected to a product separation unit, a storage tank, and so on whose illustrations are omitted.

The second flow path 32 is arranged to face the oxidation electrode 17. The second flow path 32 is connected to a solution tank or the like whose illustration is omitted, and it is configured such that the anode solution is brought into contact with the oxidation electrode 17 when it flows through the second flow path 32. The H₂O in the anode solution passed through the oxidation electrode 17 is oxidized by the oxidation electrode 17. A solution containing the oxidation reaction product of H₂O is sent to a product separation unit, a storage tank, and so on whose illustrations are omitted.

In the carbon dioxide electrolytic device 1B of the second embodiment, power is supplied from the first power supply 5 via the first power supply control unit 6, and the detection unit 9 monitors a current or a voltage flowing through the electrolysis cell 4B, in a similar manner to the first embodiment. When the current or the voltage flowing through the electrolysis cell 4B is lower than a predetermined value for a predetermined period of time, a warm-up operation by the second power supply control unit 8 and the second power supply 7 is introduced. An operation method of the warm-up operation and a method of switching between the warm-up operation and a normal operation, are similar to those of the first embodiment. By introducing the warm-up operation, the quick start-up of the electrolysis cell 4B and the followability with respect to the variable current can be secured. Further, when introducing the warm-up operation, the control of the gas control unit 10 and the control of the flow rate regulating part 25 are performed in a linked manner so that the CO₂ concentration in the gas discharged from the first flow path 31 takes a desired value. Consequently, the CO₂ concentration in the gas discharged from the first flow path 31 is regulated to take a desired value. Therefore, it becomes possible to suppress the variation with time in the CO₂ gas concentration in the produced gas, to thereby enhance the availability and utility value of the reduction reaction product.

### (Third embodiment)

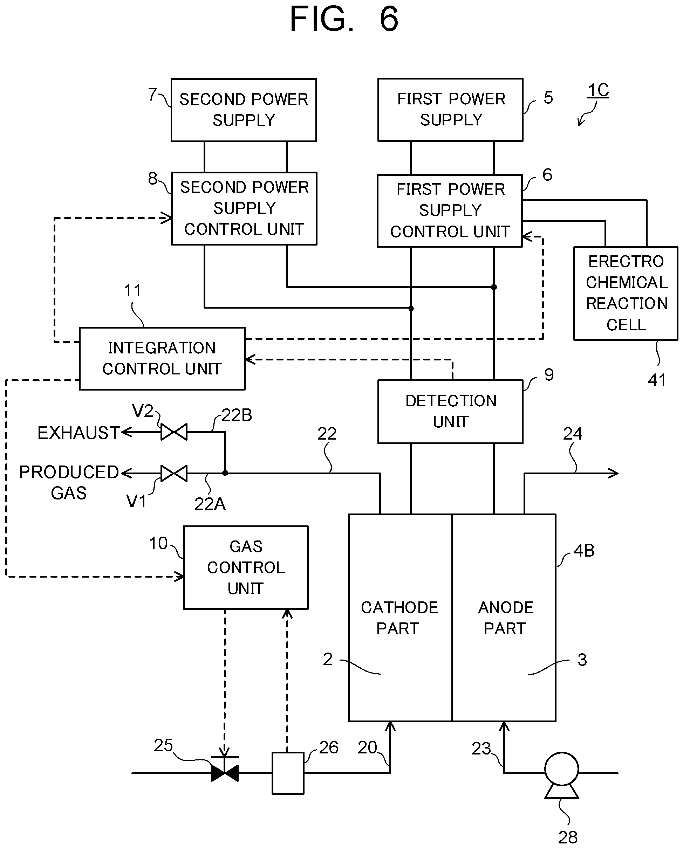

A carbon dioxide electrolytic device 1C of a third embodiment will be described while referring to FIG. 6. The carbon dioxide electrolytic device 1C illustrated in FIG. 6 is different from the carbon dioxide electrolytic device 1B of the second embodiment in a point that an electrochemical reaction cell 41, which is different from the electrolysis cell 4B, is connected to the first power supply 5 and the first power supply control unit 6 via wiring. The configurations of the respective units other than them are similar to those of the carbon dioxide electrolytic device 1B of the second embodiment.

During the normal operation, power is supplied to the electrolysis cell 4B by the first power supply control unit 6 and the first power supply 5, and the detection unit 9 monitors a current or a voltage flowing through the electrolysis cell 4B. When the current or the voltage flowing through the electrolysis cell 4B is lower than a predetermined value for a predetermined period of time, the first power supply 5 is disconnected by the first power supply control unit 6, and the electrolysis cell 4B introduces the warm-up operation by the second power supply control unit 8 and the second power supply 7. The normal operation and the warm-up operation so far are executed in a similar manner to the second embodiment.

During the warm-up operation, the first power supply 5 is disconnected from the electrolysis cell 4B. The power of the first power supply 5 disconnected from the electrolysis cell 4B is supplied to the electrochemical reaction cell 41 by the first power supply control unit 6. As the electrochemical reaction cell 41, there can be cited a water electrolysis cell, a chemical cell such as a lithium ion battery, and electrochemical equipment such as an electric double layer capacitor, in which no trouble occurs in its operation even when a voltage variation occurs. By adopting such a configuration, it is possible to effectively utilize the power of the first power supply 5 during the warm-up operation.

### (Fourth embodiment)

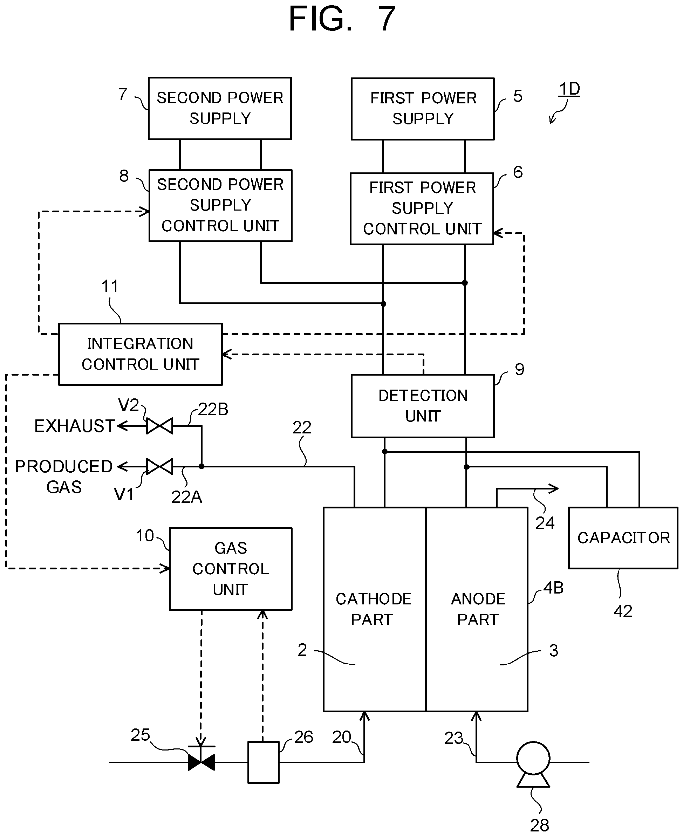

A carbon dioxide electrolytic device 1D of a fourth embodiment will be described while referring to FIG. 7. The carbon dioxide electrolytic device 1D illustrated in FIG. 7 is different from the carbon dioxide electrolytic device 1B of the second embodiment in a point that the electrolysis cell 4B and a capacitor 42 are connected in parallel via wiring. The configurations of the respective units other than them are similar to those of the carbon dioxide electrolytic device 1B of the second embodiment.

In a case where a variable power supply whose output varies depending on weather such as a solar cell or a wind power generator is used as the first power supply 5, in order to suppress the variation in the concentration of CO₂ output from the electrolysis cell 4B, the flow rate of CO₂ to be input to the electrolysis cell 4B is preferably regulated by being synchronized with a variable current. However, a response time of the flow rate of CO₂ to be supplied to the electrolysis cell 4B is longer than a variation cycle of a current, due to a pipe length or the like, and it takes one second to several tens of seconds, which causes a problem that the regulation of CO₂ flow rate becomes difficult to be synchronized with the variable current. In the fourth embodiment, the capacitor 42 is connected in parallel with the electrolysis cell 4B, to thereby smooth the current to be introduced into the electrolysis cell 4B. This makes it possible to make the regulation of CO₂ flow rate to be synchronized with the variable current.

The larger the capacity of the capacitor 42, the higher the effect of suppressing the variable current. On the other hand, when the capacity of the capacitor 42 is excessively large, it takes time to charge the capacitor, which causes a problem that it takes a long time for the current to be introduced into the electrolysis cell 4B to reach a desired value. For this reason, the capacity of the capacitor 42 is preferably 0.1 F or more and 1000 F or less, and more preferably 1 F or more and 100 F or less. As the capacitor 42, it is preferable to use an electric double layer capacitor capable of increasing capacity.

### (Fifth embodiment)

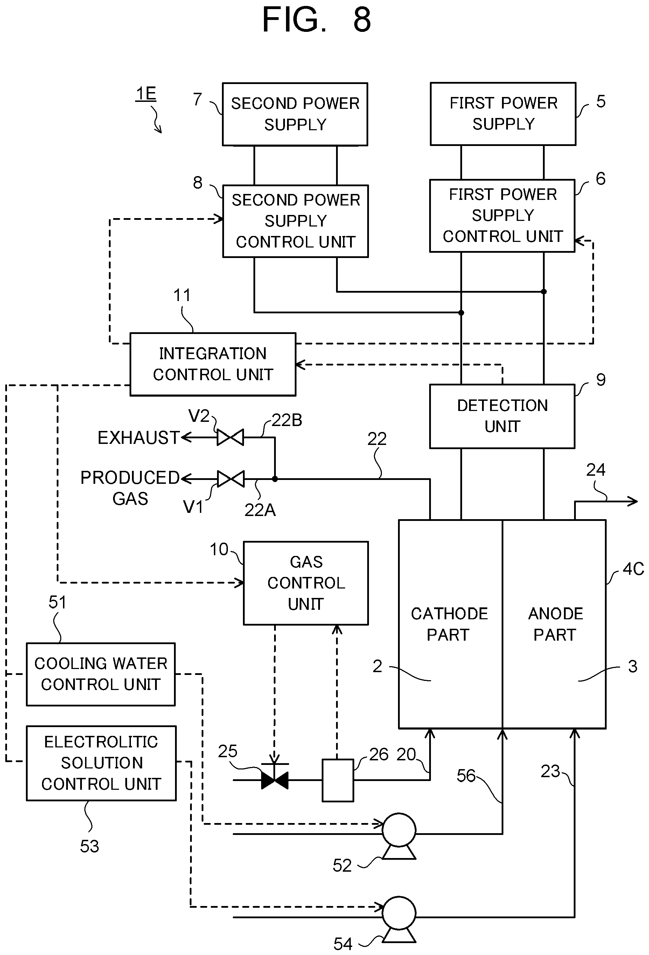

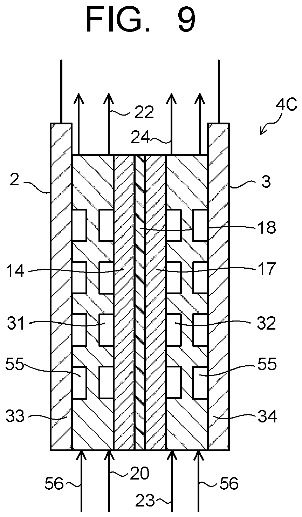

A carbon dioxide electrolytic device 1E of a fifth embodiment will be described while referring to FIG. 8 and FIG. 9. The carbon dioxide electrolytic device 1E illustrated in FIG. 8 is different from the carbon dioxide electrolytic device 1B of the second embodiment in a point that an electrolysis cell 4C includes a cooling water flow path, and besides, there are provided a cooling water control unit 51 controlling a cooling water to be flowed through the cooling water flow path, a cooling water flow rate regulating part 52, an electrolytic solution control unit 53, and an electrolytic solution flow rate regulating part 54. The configurations of the respective units other than them are similar to those of the carbon dioxide electrolytic device 1B of the second embodiment.

As illustrated in FIG. 9, the cathode part 2 of the electrolysis cell 4C has a cooling water flow path 55, separately from the first flow path 31 for allowing gas containing CO₂ to flow therethrough, and the anode part 3 has a cooling water flow path 55, separately from the second flow path 32 for allowing an electrolytic solution to flow therethrough. To the cooling water flow path 55, a cooling water supply flow path 56 for supplying the cooling water is connected. The cooling water flow rate regulating part 52 is provided to the cooling water supply flow path 56. The electrolytic solution supply flow path 23 is provided with the electrolytic solution flow rate regulating part 54. Each of the cooling water flow rate regulating part 52 and the electrolytic solution flow rate regulating part 54 is a solution feed pump such as, for example, a diaphragm pump, a tube pump, or a plunger pump.

Control signals are sent to the cooling water control unit 51 and the electrolytic solution control unit 53 from the integration control unit 11, a control signal from the cooling water control unit 51 is sent to the cooling water flow rate regulating part 52, and a control signal from the electrolytic solution control unit 53 is sent to the electrolytic solution flow rate regulating part 54. Further, the electrolysis cell 4C may also be provided with a heater whose illustration is omitted. By regulating, based on the arithmetic result obtained by the integration control unit 11, the electrolytic solution flow rate, the cooling water flow rate, a power supply amount to the heater, and the like, the temperature of the electrolysis cell 4C is regulated.

When a current or a voltage flowing through the electrolysis cell 4C detected by the detection unit 9 during the normal operation is lower than a predetermined value for a predetermined period of time, the second power supply control unit 8 introduces the warm-up operation by using the second power supply 7. At this time, the first power supply 5 may be disconnected by the first power supply control unit 6, or the first power supply 5 and the second power supply 7 may be operated in a parallel manner. During the warm-up operation, a current smaller than the rated current is made to flow through the electrolysis cell 4C, so that a Joule heat value of the electrolysis cell 4C during the warm-up operation becomes smaller than that during the normal operation. In order to set the temperature of the electrolysis cell 4C to be similar to that during the normal operation, the control such that the flow rates of the electrolytic solution and the cooling water are reduced or the power supply amount to the heater is increased, is performed during the warm-up operation. The temperature of the electrolysis cell 4C during the warm-up operation is set to be similar to that during the normal operation, which enables to secure the quick start-up to the rated current and the followability with respect to the variable current.

### (Sixth embodiment)

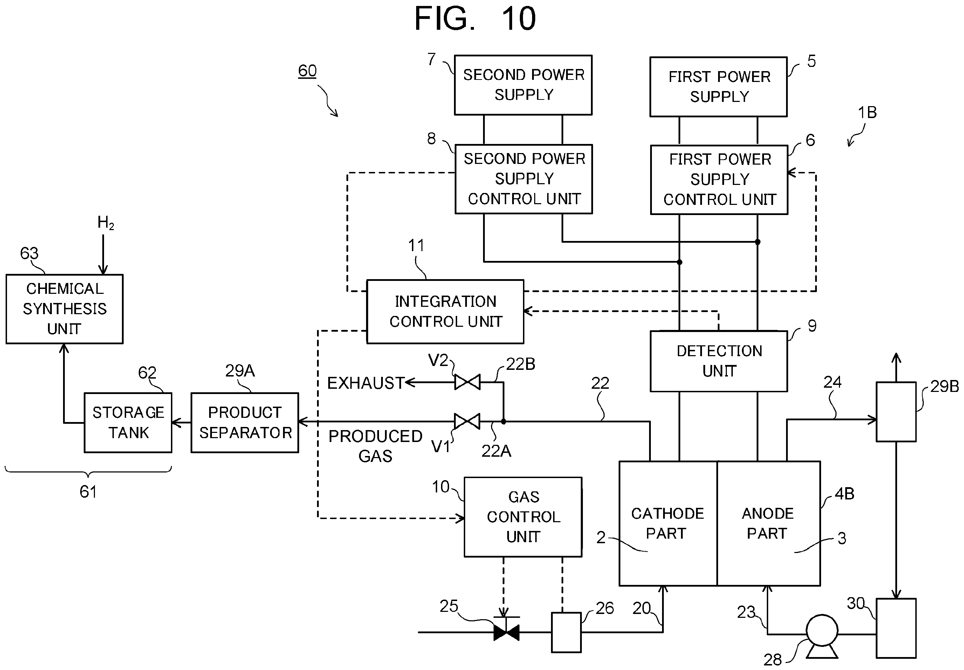

FIG. 10 illustrates a valuable material manufacturing system 60 including the carbon dioxide electrolytic device 1B of the second embodiment. The produced gas discharged from the cathode part 2 of the carbon dioxide electrolysis cell 4B may be directly utilized or consumed, and by providing a chemical synthesis device at a subsequent stage of the electrolysis cell 4B, it becomes possible to manufacture a valuable material with high added value. FIG. 10 illustrates a configuration of the valuable material manufacturing system 60 in which the carbon dioxide electrolytic device 1B and a chemical synthesis device 61 are connected.

The carbon dioxide electrolytic device 1B includes a first product separator 29A provided to the first discharge flow path 22, and a second product separator 29B and a tank 30 provided to the second discharge flow path 24. The produced gas discharged from the cathode part 2 of the electrolysis cell 4B passes through the first product separator 29A and a storage tank 62, and is sent to a chemical synthesis unit 63 to be converted into a valuable material. The first product separator 29A performs processing such as removal of moisture in the produced gas or removal of excessive CO₂ so that the gas with desired composition is introduced into the chemical synthesis unit 63. Note that when the CO₂ concentration in the produced gas is regulated in the carbon dioxide electrolytic device 1B of the embodiment, it is also possible to omit the first product separator 29A.

For example, when the CO gas is produced in the electrolysis cell 4B, by using, as a raw material, a synthesis gas obtained by mixing the produced CO gas and the H2 gas, methanol can be manufactured through methanol synthesis, or jet fuel, light oil, or the like can be manufactured through Fischer-Tropsch synthesis. At this time, when a large amount of unreacted CO₂ exists in the CO gas, there arises a problem such that a side reaction occurs during synthesis, or an adverse effect is exerted on a catalyst to be used for the synthesis, to thereby reduce yields. In the embodiment, by controlling the CO₂ concentration in the CO gas, the availability and utility value of the gas produced by the reduction reaction of CO₂ can be enhanced. In the embodiment, it is possible to perform not only the regulation of the CO₂ concentration in the produced gas but also the regulation of H₂ production being a side reaction of the aforementioned CO₂ reduction reaction.
This is because, when the amount of gas containing CO₂ to be supplied to the cathode part 2 is increased/decreased, the production amount of H₂ is also increased/decreased in accordance with that.

### EXAMPLES

Next, Examples and their evaluation results will be described.

### (Example 1)

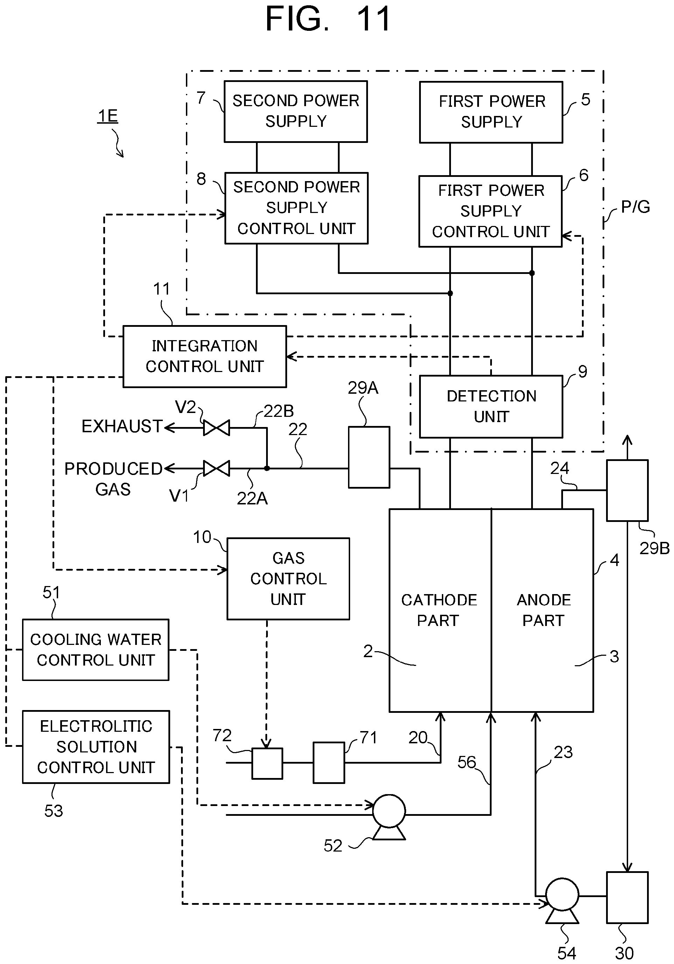

A carbon dioxide electrolytic device 1E having a configuration illustrated in FIG. 11 was manufactured. The carbon dioxide electrolytic device 1E illustrated in FIG. 11 basically has the configuration similar to that of the carbon dioxide electrolytic device 1E illustrated in FIG. 8, and it corresponds to one configured by adding, to such a configuration, a humidifier 71 provided to the first supply flow path 20, a gas/liquid separator 29A provided to the first discharge flow path 22, and a gas/liquid separator 29B and an electrolytic solution tank 30 provided to the second discharge flow path 24. As the gas flow rate regulating part, a mass flow controller 72 was used. For a verification experiment of simulating operations of the first power supply 5 and the first power supply control unit 6, operations of the second power supply 7 and the second power supply control unit 8, and an operation of the detection unit 9, a potentiostat/galvanostat P/G was used.

As a reduction electrode used in a carbon dioxide electrolysis cell, one obtained by coating carbon particles having gold nanoparticles supported thereon onto a carbon paper was used. An average particle diameter of the gold nanoparticles was 3 nm, and a support amount was 10 mass%. As an oxidation electrode, an electrode obtained by coating IrO₂ nanoparticles onto Ti mesh was used. As a diaphragm, an anion exchange membrane was used. Each of the reduction electrode and the oxidation electrode was cut to be used so that an electrode area became 16 cm². In a similar manner to the carbon dioxide electrolysis cell having the structure illustrated in FIG. 9, a first cooling water path, a first insulating plate, a first current collector plate, a first flow path, the reduction electrode, the diaphragm, the oxidation electrode, a second flow path, a second current collector plate, a second insulating plate, and a second cooling water path were stacked in this order from the left side, and were sandwiched by a not-illustrated support plate, to thereby form the carbon dioxide electrolysis cell. Further, in order to measure a reduction electrode potential and an oxidation electrode potential, not-illustrated Pt foil, serving as a reference electrode, was brought into contact with the diaphragm on the reduction electrode side.

The above-described carbon dioxide electrolysis cell was connected to the solution system and the gas system, and was operated under the following conditions. To the first flow path, the CO₂ gas (purity: > 99.9%) was introduced into the electrolysis cell via the mass flow controller and the humidifier to satisfy a predetermined flow rate. A humidification temperature was set to 40°C. The cooling water was flowed at a flow rate of 10 mL/min to the cooling water path, and by using an attachment heater for the electrolysis cell, a cell temperature was controlled to 40°C. A liquid trap as the gas/liquid separator was provided at a flow path outlet. An aqueous potassium hydrogen carbonate solution (KHCO₃ with a concentration of 0.1 M) of 1 L was flowed at a flow rate of 10 mL/min to be circulated through the second flow path.

Next, the potentiostat/galvanostat was connected to the reduction electrode, the oxidation electrode, and the reference electrode, to simulate the operations of the first power supply, the first power supply control unit, the second power supply, and the second power supply control unit. By making various kinds of currents flow between the reduction electrode and the oxidation electrode, the reduction reaction of CO₂ was performed, and values of a cell voltage, a reduction electrode potential, and an oxidation electrode potential at that time were collected.

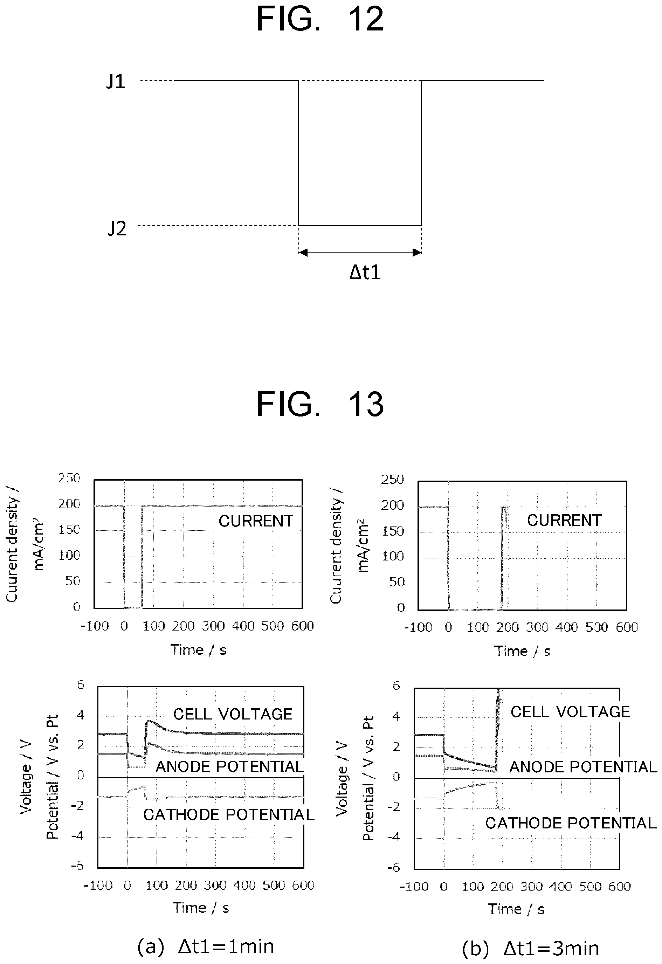

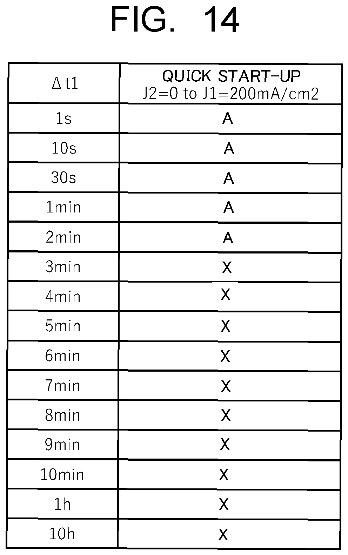

As illustrated in FIG. 12 which illustrates a temporal change in a current, as the simulation of operations of the first power supply and the first power supply control unit, a current variation test was performed in which the current was changed from a rated current J1 = 200 mA/cm² to J2 = 0 mA/cm², J2 = 0 mA/cm² was kept for a period of time of Δt1, and then start-up to J1 = 200 mA/cm² was performed. As an example, cell voltages, reduction electrode potentials, and oxidation electrode potentials when Δt1 is 1 minute and when Δt1 is 3 minutes, are illustrated in FIG. 13. It was confirmed that when Δt1 was 1 minute, it was possible to perform the quick start-up to J1 = 200 mA/cm², and on the other hand, when Δt1 was 3 minutes, the cell voltage became excessively large, and it became difficult to perform the quick start-up to J1 = 200 mA/cm². It was examined whether it was possible to perform the quick start-up to J1 = 200 mA/cm² by changing Δt1, and results thereof are collectively illustrated in Table of FIG. 14. As criteria, a condition in which the cell voltage at the start-up was less than 6 V was determined as capable of performing the quick start-up, which was indicated by "A", and a condition in which the cell voltage was 6 V or more was determined as incapable of performing the quick start-up, which was indicated by "X". As illustrated in Table of FIG. 14, it was not possible to perform the quick start-up when Δt1 was 3 minutes or more.

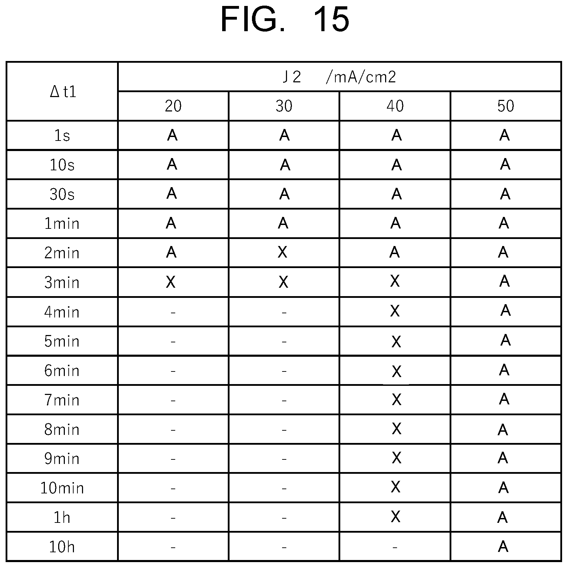

Next, as illustrated in FIG. 12 which illustrates a temporal change in a current, as the simulation of operations of the first power supply and the first power supply control unit, and operations of the second power supply and the second power supply control unit, a current variation test was performed in which the current was changed from the rated current J1 = 200 mA/cm² to J2, that state was kept for a period of time of Δt, and then start-up to J1 = 200 mA/cm² was performed. Here, J1 simulates the normal operation by the first power supply and the first power supply control unit, and J2 simulates the warm-up operation by the second power supply and the second power supply control unit. It was examined whether it was possible to perform the quick start-up to J1 = 200 mA/cm² by changing J2, and results thereof are collectively illustrated in Table of FIG. 15. As criteria, a condition in which the cell voltage at the start-up was less than 6 V was determined as capable of performing the quick start-up, which was indicated by "A", and a condition in which the cell voltage was 6 V or more was determined as incapable of performing the quick start-up, which was indicated by "X". The measurement after being determined as incapable of performing the quick start-up was stopped, which was indicated by "-". When J2 was set to 50 mA/cm², namely, when a current of 1/4 of the rated current J1 = 200 mA/cm² was energized as the warm-up operation, it was possible to perform the quick start-up to the rated current.

Based on these results, by introducing, when it is determined that the current of 40 mA/cm² or less is kept flowing for 120 seconds or more during the normal operation, the warm-up operation in which the current of 50 mA/cm², namely, the current of 1/4 of the rated current is energized, it becomes possible to secure the quick start-up and the current followability.

### (Example 2)

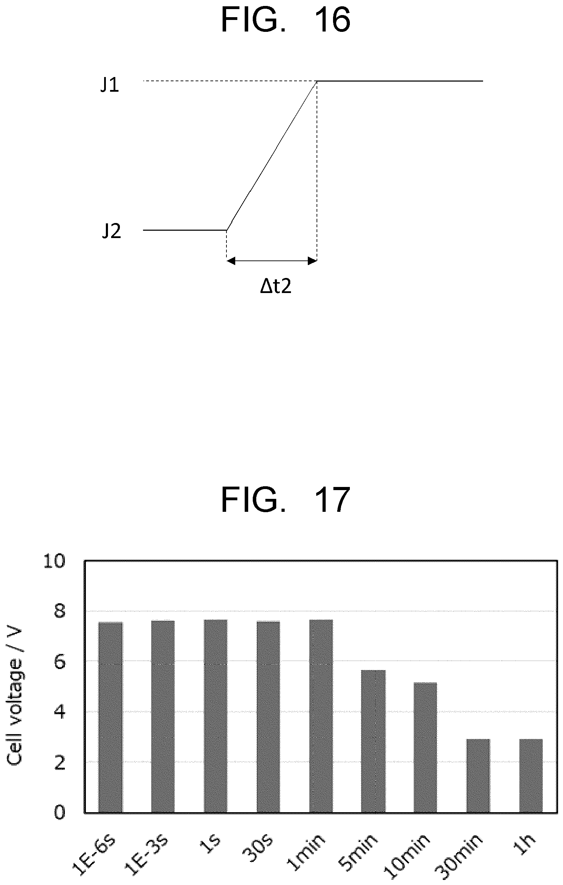

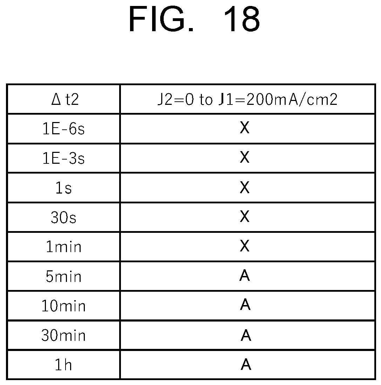

In Example 2, a simulation test of slow start-up was performed in the carbon dioxide electrolytic device 1E having the configuration illustrated in FIG. 8. As in FIG. 16 which illustrates a schematic view of current change, a current rising time Δt2 from the current of zero, namely, J2 = 0 mA/cm² to the rated current J1 = 200 mA/cm² was changed, and a value of cell voltage was collected. FIG. 17 illustrates the maximum value of the cell voltage at each Δt2. As criteria, a condition in which the cell voltage was less than 6 V was determined as capable of performing the quick start-up, which was indicated by "A", and a condition determined as incapable of performing the quick start-up was indicated by "X", and those are collectively illustrated in Table of FIG. 18. As can be understood from these results, as the operation method of cell start-up from the cellstopped state in which the current is zero to the rated current, the slow start-up using a ramp wave with the current rising time Δt2 set to 5 minutes or more, is effective. Furthermore, in order to suppress a larger cell voltage, an operation method such that the slow start-up is performed by using a ramp wave with Δt2 set to 30 minutes or more, is effective.

Note that the above-described configurations in the respective embodiments are applicable in combination, and parts thereof are also replaceable. While certain embodiments of the present invention have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A carbon dioxide electrolytic device, comprising:
an electrolysis cell including a first accommodation part for accommodating at least carbon dioxide, a second accommodation part for accommodating an electrolytic solution containing water, or water vapor, a diaphragm provided between the first accommodation part and the second accommodation part, a reduction electrode arranged in the first accommodation part, and an oxidation electrode arranged in the second accommodation part;
a first power supply control unit capable of being connected to a first power supply which supplies power to the electrolysis cell;
a second power supply control unit capable of being connected to a second power supply which supplies power to the electrolysis cell; and
an integration control unit configured to control the first power supply control unit and the second power supply control unit, and to switch the supply of power from the first power supply or the second power supply to the electrolysis cell.

2. The device according to claim 1, further comprising:
a detection unit configured to detect a reaction amount in the electrolysis cell; and
a gas control unit configured to control an amount of carbon dioxide to be supplied to the electrolysis cell based on a detection signal of the detection unit.

3. The device according to claim 2, wherein
the detection unit is configured to detect at least either of a current and a voltage of the electrolysis cell.

4. The device according to any one of claim 1 to claim 3, further comprising:
a cooling water supply unit configured to supply a cooling water to the electrolysis cell; a cooling water control unit configured to control an amount of the cooling water to be supplied to the electrolysis cell; an electrolytic solution supply unit configured to supply the electrolytic solution to the electrolysis cell; and an electrolytic solution control unit configured to control an amount of the electrolytic solution to be supplied to the electrolysis cell.

5. The device according to any one of claim 1 to claim 4, wherein
the first power supply comprises a variable power supply which converts one renewable energy selected from kinetic energy, potential energy, light energy, chemical energy, and vibrational energy into electric energy, and supplies the electric energy.

6. The device according to any one of claim 1 to claim 5, wherein
the second power supply comprises a storage battery, a fuel cell, or an electric power system.

7. The device according to any one of claim 1 to claim 6, wherein
the electrolysis cell includes a discharge flow path discharging a product from the first accommodation part, and the discharge flow path has a produced gas flow path and an exhaust flow path capable of being switched by valves.

8. The device according to any one of claim 1 to claim 7, further comprising an electrochemical reaction cell, which is different from the electrolysis cell, connected to the first power supply control unit.

9. The device according to any one of claim 1 to claim 8, further comprising a capacitor connected in parallel with the electrolysis cell.

10. A method of electrolyzing carbon dioxide, comprising:
performing a normal operation in which power is supplied from a first power supply to an electrolysis cell including a first accommodation part for accommodating at least carbon dioxide, a second accommodation part for accommodating an electrolytic solution containing water, or water vapor, a diaphragm provided between the first accommodation part and the second accommodation part, a reduction electrode arranged in the first accommodation part, and an oxidation electrode arranged in the second accommodation part; and
performing, when the power supplied from the first power supply to the electrolysis cell is lower than a predetermined value for a predetermined period of time, or when it is predicted to be lower than the predetermined value for the predetermined period of time, a warm-up operation by switching the supply of power to the electrolysis cell from the first power supply to the second power supply.

11. The method according to claim 10, wherein
in the warm-up operation, a current smaller than a current supplied from the first power supply, is supplied to the electrolysis cell from the second power supply.

12. The method according to claim 10, wherein
in the warm-up operation, when a state in which a current or a voltage flowing through the electrolysis cell is greater than a predetermined value is predicted to continue for a predetermined period of time, the current flowing through the electrolysis cell is increased from a zero-state to a predetermined current by the second power supply.

13. The method according to any one of claim 10 to claim 12, wherein
when performing the warm-up operation, an amount of carbon dioxide to be supplied to the electrolysis cell is controlled in accordance with an amount of power to be supplied from the second power supply to the electrolysis cell.

14. The method according to any one of claim 10 to claim 13, wherein
when performing the warm-up operation, a product discharged from the first accommodation part of the electrolysis cell is discarded.

15. The method according to any one of claim 10 to claim 14, wherein
when performing the warm-up operation, the first power supply is disconnected from the electrolysis cell, and is connected to an electrochemical reaction cell, which is different from the electrolysis cell.

16. The method according to any one of claim 10 to claim 15, wherein
the first power supply comprises a variable power supply which converts one renewable energy selected from kinetic energy, potential energy, light energy, chemical energy, and vibrational energy into electric energy, and supplies the electric energy.

17. The method according to any one of claim 10 to claim 16, wherein
the second power supply includes a storage battery, a fuel cell, or an electric power system.

18. A valuable material manufacturing system, comprising:
the carbon dioxide electrolytic device according to any one of claim 1 to claim 9; and
a chemical synthesis device connected to the first accommodation part of the carbon dioxide electrolytic device, and configured to perform chemical synthesis to obtain a valuable material by using at least a part of gas discharged from the first accommodation part as a raw material.
